# EUROPEAN PATENT SPECIFICATION

(11) **EP 4 284 679 B1**
(45) Date of publication and mention of the grant of the patent: **19.03.2025**
(21) Application number: 22703594.6
(22) Date of filing: 28.01.2022
(51) Int. Cl.: B60N 2/28, B60R 22/10

(54) **CHILD SAFETY SEAT**
KINDERSICHERHEITSSITZ
SIÈGE DE SÉCURITÉ POUR ENFANT

(30) Priority: 28.01.2021 CN 202110120291
(43) Date of publication of application: 06.12.2023
(60) Divisional application: 25156599.0
(73) Proprietor: Bambino Prezioso Switzerland AG, 6312 Steinhausen (CH)
(72) Inventor: LIU, Zujian, Dongguan, Guangdong 523000 (CN); ZHANG, Kun, Dongguan, Guangdong 523000 (CN); MO, Xiaolong, Dongguan, Guangdong 523000 (CN)
(74) Representative: Pfenning, Meinig & Partner mbB
(86) International application number: PCT/EP2022/052094
(87) International publication number: WO 2022/162171

(56) References cited:
- WO-A1-2012/146743
- US-A1- 2004 084 939
- US-A1- 2006 249 617
- US-B2- 8 579 091

## Description

### Field of the invention

This disclosure relates to a child safety seat, and in particular to a child safety seat with an automatically retractable tether.

### Background of the invention

A child safety seat is a seat specially designed for children. By assembling the child safety seat in a car, the child can ride on the child safety seat, so that the child can be restrained by the child safety seat for protecting the safety of the child.

When common child safety seats are used as boosters, that is, when used as level 2 and level 3, the commonly used connection method includes a latch and a car seat belt, and when used as level 0+ and level 1, other connection methods are used. In this way, as children grow up, the connection methods used are not uniform, and child caregivers need to learn how to use different connection devices, which causes inconvenience.

A tether of a traditional child safety seat is fixed on the seat. When the seat is set to be rotatable or replaceable, the tether needs to be disassembled and reconnected, and an extension path of the tether cannot be fixed, causing the tether to easily hinder riding of children or actions of operators, and occupying limited space in the car.

TOP TETHER is currently used as a fixing tool, after unlocking the TOP TETHER connector, the TOP TETHER belt will stay scatteredly outside the child safety seat, causing inconvenience to use and transport.

Related prior art document US 8,579,091 B2 relates to a dynamic energy management restraint anchor device interfacing with a child seat in a vehicle and engaging common child seat attachment clip features. A device restraint anchor is operable to dynamically extract and permit distortion of load bearing deformable members in order to manage the displacement of, and load transferred through, an anchor connected to a child seat. This document does not disclose a tether telescopically connected to the base that can be automatically retracted when it is extended relative to the base. US 2004/084939 discloses also an anchor device.

In addition, the existing child safety seat cannot indicate whether the TOP TETHER connector is fixed in place, so there are possibility of misoperation and potential safety hazards.

Thus, there is a need for a child safety seat with convenient operation and good safety.

### Summary of the Invention

An object of the present invention is to provide a child safety seat that can reduce or eliminate at least one of the above-mentioned defects.

For example, the present invention can solve the problem that the tether is scattered outside the child safety seat when the tether is not used.

In order to achieve the above object, in an aspect, the present invention provides a child safety seat, which includes a base, a rear portion of which is formed with a top rod protruding upwardly; a seat connected to the base; and a tether telescopically connected to the base, wherein the tether can be automatically retracted when it is extended relative to the base.

In an embodiment, the base includes a retractor assembly, and the retractor assembly includes: a retractor bracket fixed on the base; a retractor, both ends of which are pivotally fixed to the retractor bracket; and an elastic member connected to the retractor bracket and the retractor, and applying a torsion force to the retractor, wherein an end of the tether is fixed and wound on the retractor.

In an embodiment, the child safety seat further includes: a driving member movably provided on the retractor bracket; a restore member fixed to the base and applying a pressure to the driving member; and a switch provided on the retractor bracket, wherein the tether bypasses and contacts the driving member, and the driving member can actuate the switch.

In an embodiment, slots are respectively formed on both sides of the retractor bracket, both ends of the driving member are provided in the slots, and the tether is pulled to move the driving member in the slot, so that the driving member triggers the switch, and the restore member applies a restoring force to the driving member for returning to an unmoved state.

In an embodiment, an engaging member is formed on the retractor, an engaged member is provided on the retractor bracket, and the engaged member can be operated to engage and disengage with the engaging member.

In an embodiment, the top rod is formed in a U shape, a through hole is centrally formed in a top portion of the top rod, and the tether passes through the through hole.

In an embodiment, each of the slots is oriented in a vertical direction.

In an embodiment, when the switch is triggered, the child safety seat issues an alarm to inform that the tether is tightened.

In an embodiment, the base has an anchoring portion extending backward, the anchoring portion is an ISOFIX connector, and the tether is a TOP TETHER connector.

In an embodiment, the tether separates from the retractor at a position higher than the driving member, and the tether extends from the retractor and bypasses the driving member via a lower side of the driving member, and then extends upward out of the base.

Compared with the prior art, the child safety seat of the present disclosure is easy to operate and is not easy to mis-operate. The tether of the child safety seat can be automatically retracted, so that the child safety seat can be kept tidy when not in use.

### Brief description of the drawings

By considering the following detailed description of the preferred embodiments of the present disclosure in conjunction with the accompanying drawings, the various objectives, features, and advantages of the present disclosure will become more apparent. The drawings are only exemplary illustrations of the disclosure and are not necessarily drawn to scale. In the drawings, the same reference numerals always refer to the same or similar parts. Wherein:
Fig. 1 is a side view of a child safety seat of the present disclosure;
Fig. 2 is a perspective view of the child safety seat of the present disclosure;
Fig. 3 is a side view of the child safety seat of the present disclosure, in which a seat is different from that shown in Fig. 1;
Fig. 4 is a perspective view of a base of the child safety seat of an embodiment of the present disclosure;
Fig. 5 is a perspective view of the base of the child safety seat of an embodiment of the present disclosure, in which a decorative cover of a top rod on one side is hidden;
Fig. 6 is a perspective view of the base of the child safety seat of an embodiment of the present disclosure, in which a decorative cover of a top rod on the other side is hidden;
Fig. 7 is a perspective view of the base of the child safety seat of an embodiment of the present disclosure, in which some components are removed to show an internal structure;
Fig. 8 is a partial enlarged view of Fig. 7;
Fig. 9 is a side view of the base of the child safety seat of an embodiment of the present disclosure, in which some components are removed to show an internal structure;
Fig. 10 is a partial enlarged view of Fig. 9.

### List of reference signs

1 child safety seat
10 base
   110 top rod
      111 through hole
   120 anchor portion
20 seat
40 tether
50 retractor assembly
   510 retractor
      511 engaging member
   520 retractor bracket
      521 engaged member
      522 slot
   530 elastic member
   610 switch
   620 driving member
      630 restore member

### Detailed description of the invention

In order to further illustrate the principle and structure of the present disclosure, the preferred embodiments of the present disclosure will be described in detail with reference to the accompanying drawings. However, the embodiments are only provided for illustration and explanation and cannot be used to limit the scope of patent protection of the present disclosure.

The terms used in the present disclosure are only for the purpose of describing specific embodiments and are not intended to limit the present disclosure. The singular forms of "a", "said" and "the" used in the present disclosure and the appended claims are also intended to include plural forms, unless the context clearly indicates other meanings. It should also be understood that the term "and/or" used herein refers to and includes any or all possible combinations of one or more associated listed items.

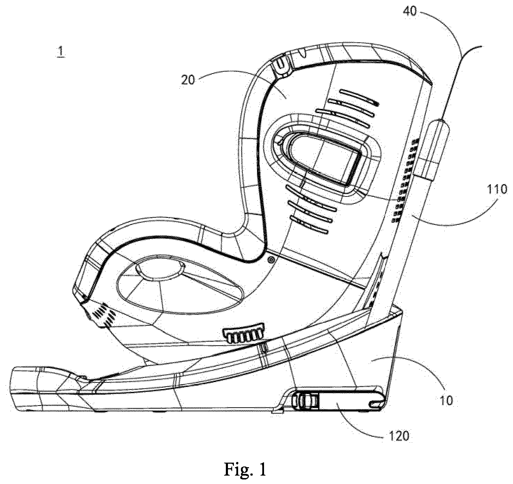

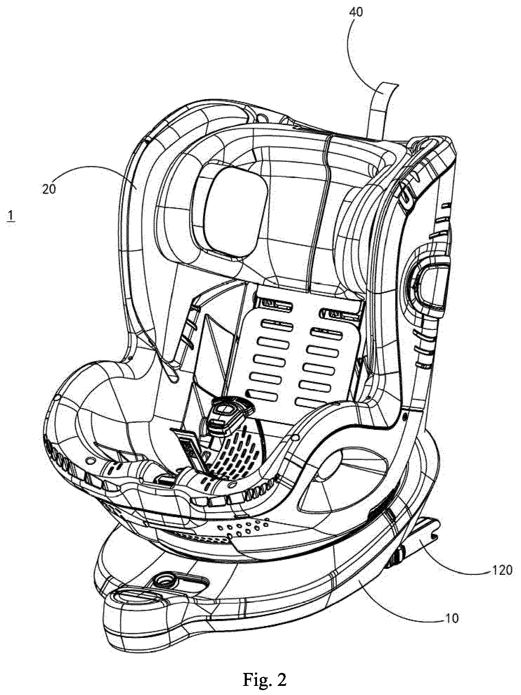

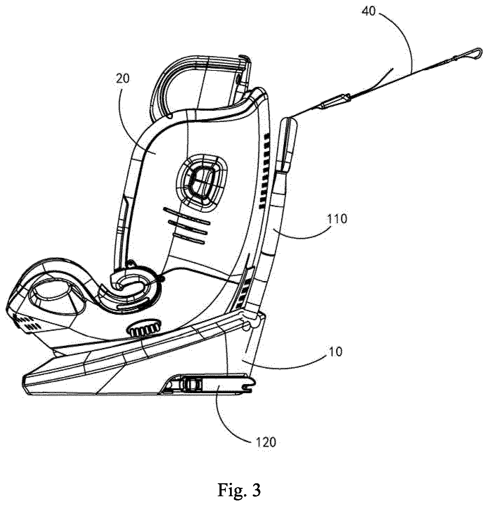

Fig. 1 is a side view of a child safety seat of the present disclosure, Fig. 2 is a perspective view of the child safety seat of the present disclosure, and Fig. 3 is a side view of the child safety seat of the present disclosure, in which a seat is different from that shown in Fig. 1.

Child safety seats may be divided into level 0+ (suitable for children of 0-13kg), level 1 (suitable for children of 9-18kg), level 2 (suitable for children of 15-25kg), and level 3 (suitable for children of 22-36kg) according to the applicable child weight. The child safety seat 1 of the present disclosure may be suitable for children from level 0+ to level 3. Child safety seats may also be classified in other ways, and this disclosure is not limited thereto.

The child safety seat 1 of the present disclosure may include: a base 10, a rear portion of which is formed with a top rod 110 protruding upwardly; a seat 20 connected to the base 10; and a tether 40 telescopically connected to the base 10, wherein the tether 40 can be automatically retracted when it is extended relative to the base 10.

The tether 40 may be a TOP TETHER connector. As shown in Figs. 1 and 3, the child safety seat 1 of the present disclosure may have different forms of seats 20. The seat 20 can be rotatably fixed on the base 10 so that the seat 20 can be used to face different directions. The seat 20 may be rotatably fixed relative to the base 10 according to one of the above classifications (for example, one of level 0+, level 1, level 2 and level 3), but the present disclosure is not limited thereto.

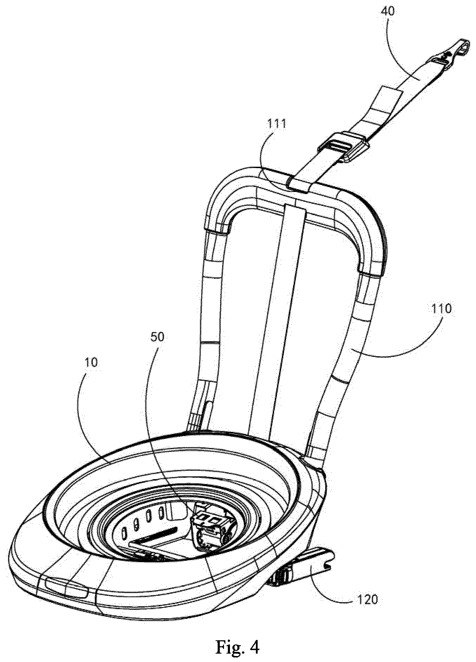

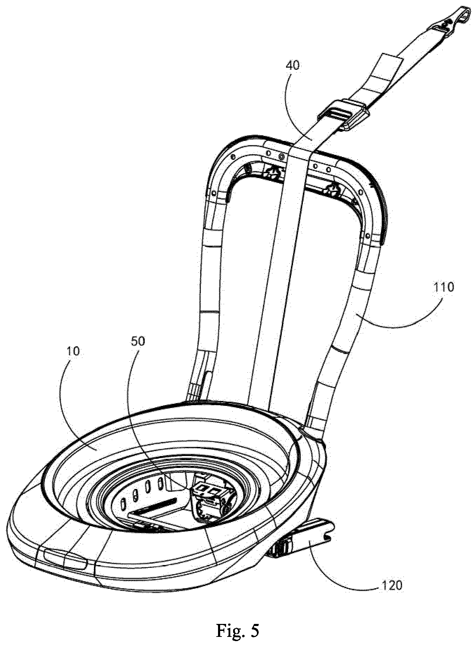

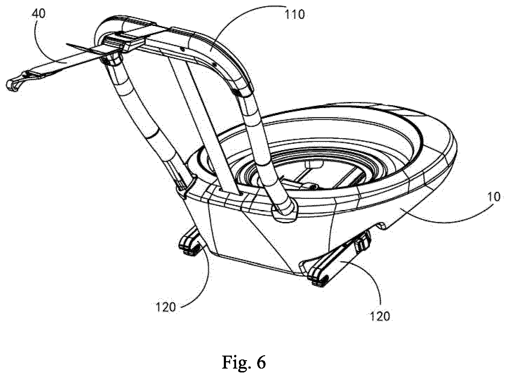

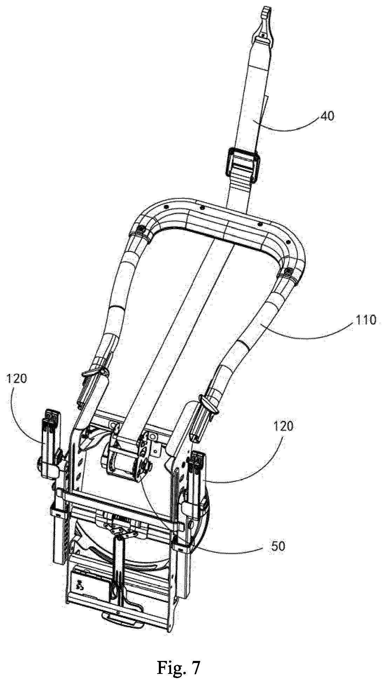

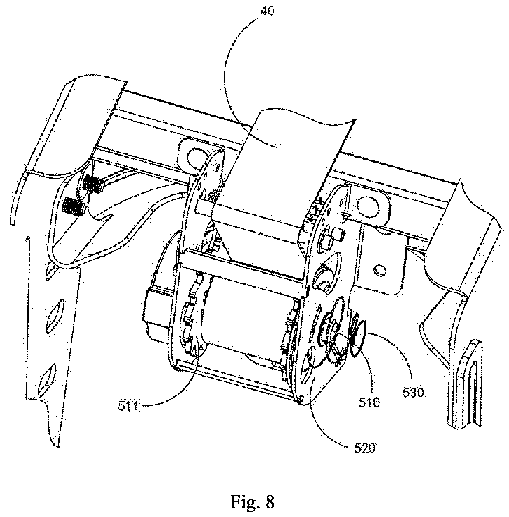

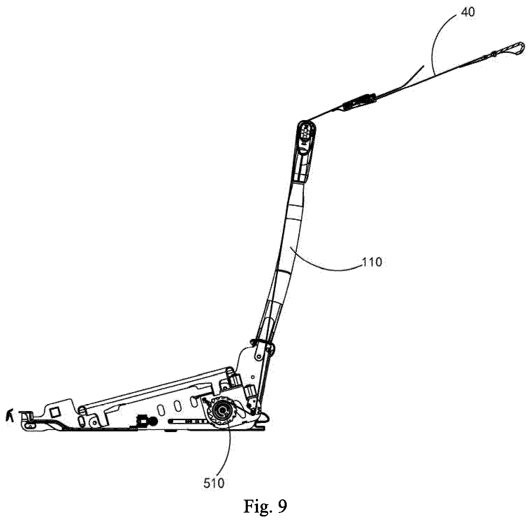

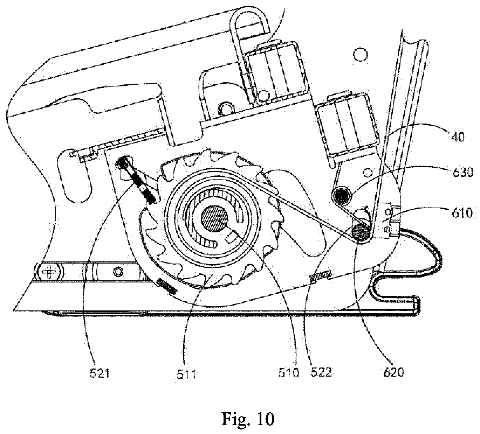

Fig. 4 is a perspective view of a base of the child safety seat of an embodiment of the present disclosure, Fig. 5 is a perspective view of the base of the child safety seat of an embodiment of the present disclosure, in which a decorative cover of a top rod on one side is hidden, Fig. 6 is a perspective view of the base of the child safety seat of an embodiment of the present disclosure, in which a decorative cover of a top rod on the other side is hidden, Fig. 7 is a perspective view of the base of the child safety seat of an embodiment of the present disclosure, in which some components are removed to show an internal structure, Fig. 8 is a partial enlarged view of Fig. 7, Fig. 9 is a side view of the base of the child safety seat of an embodiment of the present disclosure, in which some components are removed to show an internal structure, and Fig. 10 is a partial enlarged view of Fig. 9.

In a first embodiment of the present disclosure, the base 10 may include a retractor assembly 50. Specifically, as shown in Figs. 7 and 8, the retractor assembly 50 may be disposed on a frame of the base 10. The retractor assembly 50 may include: a retractor bracket 520 arranged on the base 10; a retractor 510, both ends of which are pivotally arranged to the retractor bracket 520; and an elastic member 530 connected to the retractor bracket 520 and retractor 510, and applying a restoring force to the retractor 510. The restoring force may be, for example, a force for twisting. One end of the tether 40 may be provided and wound on the retractor 510, and the other end of the tether 40 may extend out of the base 10. The elastic member 530 may be a torsion spring, and a torsion force applied by the elastic member 530 tends to rotate the retractor 510 in the direction of winding the tether 40. When the tether 40 is unlocked from a seat of a vehicle, the tether 40 can be retracted by the retractor 510 so as to prevent the tether 40 from being scattered on the outside of the child safety seat 1. Optionally, the elastic member 530 may be replaced with a motor, which may retract the tether 40 in response to the tether 40 being unlocked from the seat of the vehicle. The elastic member 530 may be another energy storage device, which may be provided in the retractor assembly 50 to exert a force to retract the tether 40 into the child safety seat 1.

In a second embodiment of the present disclosure, the child safety seat 1 may also have an alarm device. As shown in Figs. 9 and 10, the alarm device may include: a driving member 620, which is movably disposed on the retractor bracket 520; a restore member 630, which is disposed on the base 10 and may apply a pressure to the driving member 620; and a switch 610, which is provided on the retractor bracket 520. The tether 40 may bypass and contact the driving member. The driving member 620 may actuate the switch 610. The restore member 630 may be a torsion spring, a spring, a gravitational potential energy storage device, and so on. For example, when the restore member 630 is a torsion spring, it may be sleeved on a rod, and one end of the restore member 630 may abut against the base 10 or the retractor bracket 520, and the other end of the restore member 630 may abut against the driving member 620, but this disclosure is not limited thereto. The driving member 620 may be an elongated rod. When the restore member 630 is a spring, one end of the restore member 630 may abut against one side (for example, an upper side) of the driving member 620.

In the second embodiment, the switch 610 may have a mechanical button. As shown in Fig. 10, the mechanical button of the switch 610 protrudes from a lower part of a left side in the form of an arm. When the driving member 620 is actuated, its moving path meets the mechanical button of the switch 610, thereby triggering the switch 610 and then generating a signal to turn on or turn off the switch. Optionally, the switch 610 may have a sensing element. When the driving member 620 is actuated, it moves through a sensing area of the sensing element of the switch 610, thereby triggering the switch 610, and then generating a signal to turn on or turn off the switch. Of course, the switch 610 may also have other forms that may be triggered by the driving member 620, and the present disclosure is not limited thereto. Since the driving member 620 is a long rod in this embodiment, a position where the tether 40 contacts the driving member 620, a position where the restore member 630 contacts the driving member 620, and a position where the switch 610 contacts the driving member 620 may be different positions located in an axial direction of the long rod, respectively, such that the tether 40, the restore member 630 and the switch 610 do not interfere with each other.

Slots 522 may be formed on both sides of the retractor bracket 520, respectively. Each of the slots 522 may be formed in an elongated shape. A long side of each of the slots 522 may extend in a substantially vertical direction, or may extend obliquely. Both ends of the driving member 620 may be arranged in the slots 522, and the tether 40 may be pulled to move the driving member 620 in the slots 522, so that the driving member 620 triggers the switch 610, and the restore member 630 may apply a restoring force to the driving member 620 for returning to an unmoved state. The slot 522 may have a first end and a second end. Specifically, referring to Fig. 10, when an end of the tether 40 protruding out of the base 10 is pulled, the tether 40 applies a thrust to the driving member 620, so that the driving member 620 moves in the slots 522 toward the first end of the slots 522, presses the restore member 630 and triggers the switch 610. Afterwards, when the tension on the tether 40 is removed, the restore member 630 pushes the driving member 620 in the slots 522 to move to a second end of the slots 522 in an opposite direction, and the driving member 620 returns to a lower end of the slots 522.

The base 10 may have an anchor portion 120 protruding backward. The anchor portion 120 may be an ISOFIX connector, and the tether 40 may be a TOP TETHER connector.

When the switch 610 is triggered, the alarm device of the child safety seat 1 may issue an alarm to inform that the tether 40 is tightened. Specifically, the alarm may be in the form of sound and/or light. The alarm may alert an operator of the child safety seat 1 that the tether 40 has been locked to the seat of the vehicle. At this time, the operator may further lock the anchor portion 120 to the seat of the vehicle, thereby eliminating the above-mentioned alarm. In this way, it can be ensured that the child safety seat 1 is correctly installed and is not only partially installed.

Optionally, a plurality of switches 610 may be respectively arranged to be respectively associated with the tether 40 and the anchor portion 120. The alarm device may have a logic judgment device. When only a part of the plurality of switches 610 are triggered, the alarm device may issue an alarm to indicate the operator that the child safety seat 1 is not installed well. When all of the switches 610 are triggered, the alarm device may stop issuing the alarm.

The retractor 510 may be formed with an engaging member 511. The retractor bracket 520 may also be provided with an engaged member 521. The engaged member 521 may be operated to be engaged with and disengaged from the engaging member 511. For example, the engaged member 521 may be manipulated from the outside of the child safety seat 1 so that a portion of the tether 40 protruding out of the base may be locked at a certain length. The engaging member 511 may be, for example, a ratchet wheel, and the engaged member 521 may be, for example, a pawl.

In a third embodiment, the child safety seat 1 may be set to have use modes of level 0+, level 1, level 2 and level 3 respectively. For example, when the child safety seat 1 is used for the level 0+ and level 1, the seat 20 may be used to face a rear of the base 10 (that is, when the child rides on the child safety seat 1, he/she faces the rear of the vehicle); when the child safety seat 1 is used for level 2 and level 3, the seat 20 may be used to face a front of the base 10 (that is, when the child rides on the child safety seat 1, he/she faces the front of the vehicle).

In the third embodiment, the tether 40 is telescopically arranged in the base 10 and extends out of an opening of the base 20, passes the top rod 110, and is finally connected to a corresponding anchoring device on the seat of the vehicle. The seat 20 is fixedly connected to the base 10. In this way, although the tether 40 is connected to the base 10, since the seat 20 is fixedly connected to the base 10, the tether 40 can still restrain the seat 20 and ensure that the seat 20 is fixed in place. Since the tether 40 passes the top rod 110 and extends rearward, an action point of a pulling force exerted by the tether 40 connected to the seat of the vehicle on the child safety seat 1 is located on the top rod 110. Two anchor portions 120 protruding rearward from both sides of the base 10 are connected to corresponding anchoring devices on the seat. In this way, the action point of the pulling force of the tether 40 and the action points of the two anchor portions 120 on the base 10 form a triangle, thereby fixing the child safety seat 1 and preventing it from turning over.

In the third embodiment, since the tether 40 does not need to be connected to the seat 20, after the child safety seat 1 is installed on the vehicle seat, no matter whether it is in any mode of level 0+, level 1, level 2 and level 3, a same connection method may be used, no disassembly or conversion steps are required, so it is easy to use.

The features contained in the first, second and third embodiments of the present disclosure may all be applied to the child safety seat 1 alone, or used together in any combination in the child safety seat 1.

As shown in Fig. 4, in an embodiment, the top rod 110 may be formed in a U shape, and the U shape is formed upside down on the base 10. The tether 40 extending out of the base 10 may pass through or bypass the top rod 110 to further extend. The tether 40 may be slidably fixed on the top rod 110 to restrict its further extension path. For example, the tether 40 may pass through a through hole 111 formed on the top rod 110. Optionally, the through hole 111 may be formed offset.

Optionally, the top rod 110 may be covered with a top rod decorative cover, and the tether 40 may pass between the top rod 110 and the top rod decorative cover to be constrained. As shown in Fig. 5, where Fig. 5 is a view after removing the top rod decorative cover in Fig. 4, the top rod 110 may not have a through hole 111. The part of the tether 40 protruding out of the base 10 extends between the top of the inverted U-shaped top rod 110 and the seat 20, and passes over the top rod 110, and then engages with the seat of the vehicle. Since the top rod decorative cover restricts the tether 40 to prevent it from sliding left and right, the extension path of the tether 40 passing over the top rod 110 is relatively fixed.

When the switch is triggered, the child safety seat issues an alarm to inform that the tether is tightened.

The tether 40 separates from the retractor 510 at a position higher than the driving member 620. The tether 40 extends from the retractor 510, bypasses the driving member 620 via a lower side of the driving member 620, and then extends upwards and out of the base 10. As shown in Fig. 10, the tether 40 wound on the retractor 510 first extends to the lower right, bypasses the driving member 620, and then extends to the upper or upper right, so as to ensure that the driving member 620 is actuated upward when the tether 40 is tightened.

After considering the specification and practicing the invention disclosed herein, those skilled in the art will easily think of other embodiments of the present disclosure. This disclosure is intended to cover any variations, uses, or adaptive changes of this disclosure. These variations, uses, or adaptive changes follow the general principles of the present disclosure and include common knowledge or conventional technical means in the technical field that are not disclosed in this disclosure. The description and the embodiments are only regarded as exemplary, and the true scope and spirit of the disclosure are pointed out by the claims of the disclosure.

## Claims

1. A child safety seat (1) comprising:
a base (10), a rear portion of which is formed with a top rod (110) protruding upwardly;
a seat (20) connected to the base (10); and
a tether (40) telescopically connected to the base (10),
wherein the tether (40) can be automatically retracted when it is extended relative to the base (10).

2. The child safety seat (1) according to claim 1, **characterized in that** the base (10) comprises a retractor assembly (50), and the retractor assembly (50) comprises:
a retractor bracket (520) fixed on the base (10);
a retractor (510), both ends of which are pivotally fixed to the retractor bracket (50); and
an elastic member (530) connected to the retractor bracket (50) and the retractor (510), and applying a torsion force to the retractor (510),
wherein an end of the tether (40) is fixed and wound on the retractor (510).

3. The child safety seat (1) according to claim 2, further comprising:
a driving member (620) movably provided on the retractor bracket (50);
a restore member (630) fixed to the base (10) and applying a pressure to the driving member (620); and
a switch (610) provided on the retractor bracket (50),
wherein the tether (40) bypasses and contacts the driving member (620), and the driving member (620) can actuate the switch (610).

4. The child safety seat (1) according to claim 3, **characterized in that** slots (522) are respectively formed on both sides of the retractor bracket (50), both ends of the driving member (620) are provided in the slots (522), and the tether (40) is pulled to move the driving member (620) in the slots (522), so that the driving member (620) triggers the switch (610), and the restore member (630) applies a restoring force to the driving member (620) for returning to an unmoved state.

5. The child safety seat (1) according to any of the claims 2 to 4, **characterized in that** an engaging member (511) is formed on the retractor (510), an engaged member (521) is provided on the retractor bracket (50), and the engaged member (521) can be operated to engage and disengage with the engaging member (511).

6. The child safety seat (1) according to any of the preceding claims, **characterized in that** the top rod (110) is formed in a U shape, a through hole (111) is centrally formed in a top portion of the top rod (110), and the tether (40) passes through the through hole (111).

7. The child safety seat (1) according to claim 4, optionally in combination with claim 5 or 6, **characterized in that** each of the slots (522) is oriented in a vertical direction.

8. The child safety seat (1) according to claim 3, optionally in combination with any of the claims 4 to 7, **characterized in that** the child safety seat (1) issues an alarm to inform that the tether (40) is tightened when the switch (610) is triggered.

9. The child safety seat (1) according to any of the preceding claims, **characterized in that** the base (10) has an anchoring portion (120) extending backward, the anchoring portion (120) is an ISOFIX connector, and the tether (40) is a TOP TETHER connector.

10. The child safety seat (1) according to claim 3, optionally in combination with any of the claims 4 to 9, **characterized in that** the tether (40) separates from the retractor (510) at a position higher than the driving member (620), and the tether (40) extends from the retractor (510), bypasses the driving member (620) via a lower side of the driving member (620), and then extends upward out of the base (10).

## Patentansprüche

1. Kindersicherheitssitz (1), umfassend:
eine Basis (10), an deren hinterem Teil eine obere Stange (110) ausgebildet ist, die nach oben vorsteht;
einen Sitz (20), der mit der Basis (10) verbunden ist; und
einen Haltegurt (40), der ein- und ausziehbar mit der Basis (10) verbunden ist,
wobei der Haltegurt (40) automatisch eingezogen werden kann, wenn er in Bezug auf die Basis (10) ausgezogen wurde.

2. Kindersicherheitssitz (1) nach Anspruch 1, **dadurch gekennzeichnet, dass** die Basis (10) eine Retraktorbaugruppe (50) umfasst und die Retraktorbaugruppe (50) umfasst: eine Retraktorhalterung (520), die an der Basis (10) fixiert ist;
einen Retraktor (510), von dem beide Enden verschwenkbar an der Retraktorhalterung (50) fixiert sind; und
ein elastisches Element (530), das mit der Retraktorhalterung (50) und dem Retraktor (510) verbunden ist und das eine Torsionskraft auf den Retraktor (510) ausübt,
wobei ein Ende des Haltegurts (40) an dem Retraktor (510) fixiert und auf dieses gewickelt ist.

3. Kindersicherheitssitz (1) nach Anspruch 2, ferner umfassend:
ein Antriebselement (620), das bewegbar an der Retraktorhalterung (50) bereitgestellt ist;
ein Rückstellelement (630), das an der Basis (10) fixiert ist und einen Druck auf das Antriebselement (620) ausübt; und
einen Schalter (610), der an der Retraktorhalterung (50) bereitgestellt ist,
wobei der Haltegurt (40) an dem Antriebselement (620) entlang läuft und dieses berührt und das Antriebselement (620) den Schalter (610) betätigen kann.

4. Kindersicherheitssitz (1) nach Anspruch 3, **dadurch gekennzeichnet, dass** auf beiden Seiten der Retraktorhalterung (50) jeweils Schlitze (522) ausgebildet sind, beide Enden des Antriebselements (620) in den Schlitzen (522) bereitgestellt sind und an dem Haltegurt (40) gezogen wird, um das Antriebselement (620) in den Schlitzen (522) zu bewegen, so dass das Antriebselement (620) den Schalter (610) auslöst, und das Rückstellelement (630) eine Rückstellkraft für eine Rückkehr in einen unbewegten Zustand auf das Antriebselement (620) ausübt.

5. Kindersicherheitssitz (1) nach einem der Ansprüche 2 bis 4, **dadurch gekennzeichnet, dass** ein Eingriffselement (511) an dem Retraktor (510) ausgebildet ist, ein zu greifendes Element (521) an der Retraktorhalterung (50) bereitgestellt ist und das zu greifende Element (521) betätigt werden kann, um mit dem Eingriffselement (511) in und außer Eingriff gebracht zu werden.

6. Kindersicherheitssitz (1) nach einem der vorangehenden Ansprüche, **dadurch gekennzeichnet, dass** die obere Stange (110) in einer U-Form ausgebildet ist, eine Durchgangsloch (111) mittig in einem oberen Teil der oberen Stange (110) ausgebildet ist und der Haltegurt (40) durch das Durchgangsloch (111) verläuft.

7. Kindersicherheitssitz (1) nach Anspruch 4, optional in Kombination mit Anspruch 5 oder 6, **dadurch gekennzeichnet, dass** jeder der Schlitze (522) in einer vertikalen Richtung ausgerichtet ist.

8. Kindersicherheitssitz (1) nach Anspruch 3, optional in Kombination mit einem der Ansprüche 4 bis 7, **dadurch gekennzeichnet, dass** der Kindersicherheitssitz (1) einen Alarm ausgibt, um mitzuteilen, dass der Haltegurt (40) gespannt wird, wenn der Schalter (610) ausgelöst wird.

9. Kindersicherheitssitz (1) nach einem der vorangehenden Ansprüche, **dadurch gekennzeichnet, dass** die Basis (10) einen Verankerungsteil (120) aufweist, der sich nach hinten erstreckt, der Verankerungsteil (120) ein ISOFIX-Verbinder ist und der Haltegurt (40) ein TOP-TETHER-Verbinder ist.

10. Kindersicherheitssitz (1) nach Anspruch 3, optional in Kombination mit einem der Ansprüche 4 bis 9, **dadurch gekennzeichnet, dass** der Haltegurt (40) sich an einer Position, die höher ist als das Antriebselement (620), von dem Retraktor (510) trennt und der Haltegurt (40) von dem Retraktor (510) ausgeht, über eine untere Seite des Antriebselements (620) an dem Antriebselement (620) entlang läuft und sich dann aufwärts aus der Basis (10) heraus erstreckt.

## Revendications

1. Siège de sécurité pour enfant (1) comprenant :
une base (10) dont une partie arrière est formée de manière à comporter un tube en arceau en partie supérieure (110) qui fait saillie vers le haut ;
un siège (20) connecté à la base (10) ; et
une sangle (40) connectée de façon télescopique à la base (10),
dans lequel la sangle (40) peut être rétractée automatiquement lorsqu'elle est étendue par rapport à la base (10).

2. Siège de sécurité pour enfant (1) selon la revendication 1, **caractérisé en ce que** la base (10) comprend un ensemble de rétracteur (50), et l'ensemble de rétracteur (50) comprend une console de rétracteur (520) fixée sur la base (10) ;
un rétracteur (510) dont les deux extrémités sont fixées de façon pivotante à la console de rétracteur (50) ; et
un élément élastique (530) qui est connecté à la console de rétracteur (50) et au rétracteur (510) et qui applique une force de torsion sur le rétracteur (510),
dans lequel une extrémité de la sangle (40) est fixée et enroulée sur le rétracteur (510).

3. Siège de sécurité pour enfant (1) selon la revendication 2, comprenant en outre :
un élément d'entraînement (620) prévu de façon mobile et amovible sur la console de rétracteur (50) ;
un élément de rappel (630) qui est fixé à la base (10) et qui applique une pression sur l'élément d'entraînement (620) ; et
un commutateur (610) prévu sur la console de rétracteur (50),
dans lequel la sangle (40) contourne l'élément d'entraînement (620) et entre en contact avec celui-ci, et l'élément d'entraînement (620) peut actionner le commutateur (610).

4. Siège de sécurité pour enfant (1) selon la revendication 3, **caractérisé en ce que** des fentes (522) sont respectivement formées sur les deux côtés de la console de rétracteur (50), les deux extrémités de l'élément d'entraînement (620) sont positionnées dans les fentes (522), et la sangle (40) est tirée pour déplacer l'élément d'entraînement (620) dans les fentes (522), de telle sorte que l'élément d'entraînement (620) déclenche le commutateur (610) et que l'élément de rappel (630) applique une force de rappel sur l'élément d'entraînement (620) pour le ramener dans un état non déplacé.

5. Siège de sécurité pour enfant (1) selon l'une quelconque des revendications 2 à 4, **caractérisé en ce qu'**un élément d'engagement (511) est formé sur le rétracteur (510), un élément engagé (521) est prévu sur la console de rétracteur (50), et l'élément engagé (521) peut être rendu opérationnel pour être engagé avec l'élément d'engagement (511) et pour en être désengagé.

6. Siège de sécurité pour enfant (1) selon l'une quelconque des revendications précédentes, **caractérisé en ce que** le tube en arceau en partie supérieure (110) est formé selon une forme de U, un trou traversant (111) est formé de façon centrale dans une partie supérieure du tube en arceau en partie supérieure (110), et la sangle (40) passe au travers du trou traversant (111).

7. Siège de sécurité pour enfant (1) selon la revendication 4, en option en combinaison avec la revendication 5 ou 6, **caractérisé en ce que** chacune des fentes (522) est orientée dans une direction verticale.

8. Siège de sécurité pour enfant (1) selon la revendication 3, en option en combinaison avec l'une quelconque des revendications 4 à 7, **caractérisé en ce que** le siège de sécurité pour enfant (1) délivre une alarme pour informer du fait que la sangle (40) est serrée lorsque le commutateur (610) est déclenché.

9. Siège de sécurité pour enfant (1) selon l'une quelconque des revendications précédentes, **caractérisé en ce que** la base (10) comporte une partie d'ancrage (120) qui est étendue vers l'arrière, la partie d'ancrage (120) est un connecteur ISOFIX, et la sangle (40) est un connecteur TOP TETHER.

10. Siège de sécurité pour enfant (1) selon la revendication 3, en option en combinaison avec l'une quelconque des revendications 4 à 9, **caractérisé en ce que** la sangle (40) est séparée du rétracteur (510) au niveau d'une position plus haute que l'élément d'entraînement (620), et la sangle (40) est étendue depuis le rétracteur (510), elle contourne l'élément d'entraînement (620) via un côté inférieur de l'élément d'entraînement (620) puis elle est étendue vers le haut en dehors de la base (10).
